# EUROPEAN PATENT APPLICATION

(11) **EP 1 266 702 A2**
(43) Date of publication of application: **18.12.2002**
(21) Application number: 02254127.0
(22) Date of filing: 13.06.2002
(51) Int. Cl.: B05D 7/06

(54) **Method for making composite slabs**

(30) Priority: 16.06.2001 GB 0114749
(71) Applicant: Deco Holdings Limited, Blandford Forum, Dorset DT11 OHZ. (GB)
(72) Inventor: De Rozarieux, David Michael, Blandford Forum, Dorset, DT11 OHZ, (GB)
(74) Representative: Brown, Michael Stanley

(57) **Abstract**

A method is provided of making a composite slab, for example, a fire surround back panel or half panel, or a work top. The method comprises:-
a) applying a coating to a Class "O" fire-resistant substrate by spraying onto the substrate a composition which includes a resin and chips, e.g. plastic chips,
b) sanding the applied coating, and/or
c) polishing the applied coating.

## Description

### Field of the Invention

This invention relates to composite slabs.

Composite slabs are quite widely used in the manufacture of sink tops, vanity units and work surfaces and it is an object of the present invention to provide an improved method of making composite slabs which allows one to obtain a wider range of applications of the composite slabs.

Marble or composite slabs are currently used in the manufacture of fire surround back panels and half panels. The breakage rate for such panels is, however, very high and adds considerably to the overall cost of producing the surrounds. It also makes distribution of the slabs cumbersome and expensive.

It is accordingly another object of the present invention to provide a method of making composite slabs which can be used as fire surround back panels and half panels.

It is a further object of the present invention to provide a method of making composite slabs which can be drilled, tapped and the like.

It is an additional object of the present invention to provide an improved form of composite slab.

### Summary of the Invention

According to a first aspect of the present invention there is provided a method of making a composite slab which comprises:-
a) applying a coating to a Class "O" fire-resistant substrate by spraying onto the substrate a composition which includes a resin and chips, and
b) sanding the applied coating, and/or
c) polishing the applied coating.

The chips may be plastic chips, for example, polyester chips of a colour which is different to the colour of the resin, which may also be a polyester. The chips may alternatively be of a naturally occurring material, for example, they may be granite chips.

The coating composition is preferably, but not necessarily, applied in more than one stage. The stages in which the coating composition is applied may include a first stage in which chips of an initial size or size range are employed and a subsequent stage in which chips of a larger size or size range are employed.

The stages in which the coating composition is applied preferably includes a final stage in which the resin does not contain any chips.

The procedure which is used may include a dragging operation after the application of the coating composition containing the larger size chips, the dragging operation being such as to produce a veined effect in the final product.

The resins applied to the substrate at each of the different stages may be of the same colour or of different colours, enhanced aesthetic effects being obtained by the use of differently coloured resins.

The procedure which is adopted will depend on the effect which is required. Thus, a single application of small chips will be used to produce a granite effect finish. An application of small chips followed by an application of larger chips will be used to produce a plain marble effect. To produce a veined marble effect, the application of the two sizes of chips will be followed by a dragging operation.

The Class "O" fire-resistant substrate is preferably a cement-bonded fibreboard.

According to a second aspect of the present invention there is provided a composite slab made by the method defined above.

According to a third aspect of the present invention there is provided a fire surround back panel or half panel comprising a composite slab made by the method defined above.

### Description of the Preferred Embodiments

In one example of the present invention, a composite slab is produced for use as a fire surround back panel or half panel starting with a Class "O" fire-resistant substrate in the form of a sheet of cement-bonded fibre board of the appropriate dimensions and configuration.

A first polyester resin coating composition is provided which contains coloured polyester chips and a filler. The preferred polyester resin is based on iso-phthalic acid and neo-pentyl glycol and the amount by weight of the coloured polyester chips is typically of the order of from 30 to 35% by weight of the weight of the resin. The resin is a high-clarity, low colour, low to medium viscosity mix which gives good air release without causing settlement of the polyester chips or the filler during application and curing. The preferred filler is aluminium trihydrate which is translucent and, therefore, does not detract from the aesthetic effect provided by the coloured chips which can be of varying selected colours depending on the visual effect which is required.

A second polyester resin composition is also provided which is similar to the first polyester resin composition and differs therefrom only in respect of the sizes of the coloured polyester chips. The chips in the second resin composition are of a size (or an average size) greater than the size (or the average size) of the chips in the first resin composition.

A third polyester resin composition is also provided and this differs from the first and second resin compositions in that it does not contain any coloured chips.

In the first stage of one form of coating process, the first polyester resin composition is applied to the substrate by spraying. The chips may be premixed with the polyester resin and the mixture comprising the resin, filler and chips applied to the substrate together. Alternatively, the resin and filler may be applied first, so as to form a coating on the substrate, and then the chips are sprayed on top of the applied resin coating.

The second resin composition is then applied to the substrate, on top of the initial layer formed on application of the first polyester resin composition before significant curing of the first resin composition has taken place. As with the first resin composition, the chips of larger size may either be premixed with the resin and the filler or applied separately, after the resin and the filler have been sprayed on to the substrate.

The temperature at which the coating process is carried out and the specific formulae of the constituents are such that a degree of softening of the plastic chips takes place such that, when a dragging operation is carried out after application of the second resin composition, the plastic chips are deformed and a veined effect is obtained - providing an appearance simulating that of veined marble.

The chips in the second resin composition may be of a number of colours, and these colours may be the same as the colours of the chips in the first resin composition.

After dragging of the applied first and second resin composition has been effected, the third resin composition, i.e. that containing no chips at all, is sprayed on top of the coatings already applied to the substrate, and the complete coating is then cured or allowed to cure.

Once hardening of the coating has been completed, a sanding operation is carried out to provide a relatively smooth surface finish and a coating of substantially uniform thickness covering the whole of the underlying substrate. Polishing of the sanded product is then effected to obtain the required surface finish and aesthetic appeal.

The final product may have an appearance simulating that of veined marble and may include any desired colour effects, depending on the colours of the plastic chips which are used and the colours of the polyester resins.

As an alternative to producing a final product having a veined marble effect, it is possible to produce a product having an appearance simulating that of granite. In that case, the first resin composition is applied, followed by the third resin composition, i.e. the application of the second resin composition is omitted.

As a further alternative, the first and second resin compositions may be applied, as described above, immediately followed by the third resin composition, i.e. the dragging operation is omitted. The final product then has an appearance simulating that of unveined marble.

The chips which are employed may be polyester chips of varying colours and sizes, as described above. Chips of naturally occurring materials may also be employed, for example, granite chips, depending on the aesthetic appeal which is required.

The end product may be a fire surround back panel or half panel, as mentioned above. Other products which can be made in this way include sink tops, work surfaces, furniture, vanity units, wall panels and floor panels.

In each case, the end product is not only fire-resistant but crack resistant. It can also be drilled, tapped and otherwise machined and any blemishes which may occur can readily be repaired, thereby substantially reducing or avoiding stock breakage problems such as those currently encountered when marble components are employed.

## Claims

1. A method of making a composite slab which comprises:-
a) applying a coating to a Class "O" fire-resistant substrate by spraying onto the substrate a composition which includes a resin and chips, and
b) sanding the applied coating, and/or
c) polishing the applied coating.

2. A method as claimed in Claim 1, in which the coating composition which includes a resin and chips is applied in more than one stage.

3. A method as claimed in Claim 2, in which the stages in which the coating composition is applied includes a first stage in which chips of an initial size or size range are employed and a subsequent stage in which chips of a larger size or size range are employed.

4. A method as claimed in Claim 2 or Claim 3, in which the stages in which the coating composition is applied includes a final stage in which the resin does not contain any chips.

5. A method as claimed in Claim 3, in which the procedure which is used includes a dragging operation after the application of the coating composition including the larger size chips, the dragging operation being such as to produce a veined effect in the final product.

6. A method as claimed in any one of Claims 2 to 5, in which the resins applied to the substrate at each of the different stages are of the same colour.

7. A method as claimed in any one of Claims 2 to 5, in which the resins applied to the substrate at each of the different stages are of different colours, such that enhanced aesthetic effects are obtained.

8. A method as claimed in any one of the preceding claims, in which the resin is a polyester.

9. A method as claimed in Claim 8, in which the chips are plastic chips.

10. A method as claimed in Claim 9, in which the plastic chips are of a polyester.

11. A method as claimed in Claim 8, in which the chips are of a naturally occurring material.

12. A method as claimed in Claim 11, in which the chips are granite chips.

13. A method as claimed in any one of the preceding claims, in which the Class "O" fire-resistant substrate is a cement-bonded fibreboard.

14. A composite slab made by the method claimed in any one of the preceding claims.

15. A fire surround back panel or half panel comprising a composite slab made by the method claimed in any one of Claims 1 to 13.
